# EUROPEAN PATENT SPECIFICATION

(11) **EP 3 745 798 B1**
(45) Date of publication and mention of the grant of the patent: **15.10.2025**
(21) Application number: 20186208.3
(22) Date of filing: 28.08.2014
(51) Int. Cl.: H04W 76/14, H04W 72/20

(54) **RESOURCE ALLOCATION METHOD, USER EQUIPMENT AND COMPUTER STORAGE MEDIUM**
RESSOURCENZUWEISUNGSVERFAHREN, BENUTZERGERÄT UND COMPUTERSPEICHERMEDIUM
PROCÉDÉ D'ATTRIBUTION DE RESSOURCE, ÉQUIPEMENT UTILISATEUR ET SUPPORT D'INFORMATIONS INFORMATIQUE

(30) Priority: 29.01.2014 CN 201410043224
(43) Date of publication of application: 02.12.2020
(62) Divisional of application: 14880686.2
(73) Proprietor: ZTE Corporation, Shenzhen Guangdong 518057 (CN)
(72) Inventor: CHEN, Lin, Shenzhen, Guangdong, 518057 (CN); LI, Dapeng, Shenzhen, Guangdong, 518057 (CN); HUANG, Ying, Shenzhen, Guangdong, 518057 (CN); WU, Shuanshuan, Shenzhen, Guangdong, 518057 (CN)
(74) Representative: Aipex B.V.

(56) References cited:
- US-A1- 2013 287 012
- US-A1- 2013 322 276
- ZTE CORPORATION: "On resource allocation for D2D discovery", vol. RAN WG2, no. San Francisco, USA; 20131111 - 20131115, 13 November 2013 (2013-11-13), XP050736960, Retrieved from the Internet <URL:http://www.3gpp.org/ftp/Meetings_3GPP_SYNC/RAN/RAN2/Docs/> [retrieved on 20131113]
- ZTE: "Consideration on the SI of LTE Device to Device Proximity Services", vol. RAN WG3, no. Barcelona, Spain; 20130819 - 20130823, 9 August 2013 (2013-08-09), XP050719525, Retrieved from the Internet <URL:http://www.3gpp.org/ftp/tsg_ran/WG3_Iu/TSGR3_81/Docs/> [retrieved on 20130809]
- ETRI: "Fully scheduled D2D transmission in LTE-coverage", vol. RAN WG2, no. San Francisco, USA; 20131111 - 20131115, 13 November 2013 (2013-11-13), XP050736894, Retrieved from the Internet <URL:http://www.3gpp.org/ftp/Meetings_3GPP_SYNC/RAN/RAN2/Docs/> [retrieved on 20131113]
- HUAWEI ET AL: "Group management consideration and protocol stack design", vol. RAN WG2, no. San Francisco, USA; 20131111 - 20131115, 13 November 2013 (2013-11-13), XP050736920, Retrieved from the Internet <URL:http://www.3gpp.org/ftp/Meetings_3GPP_SYNC/RAN/RAN2/Docs/> [retrieved on 20131113]
- BROADCOM CORPORATION: "Discussion on L2 User Plane Configuration for D2D communication and Discovery", vol. RAN WG2, no. San Francisco; 20131111 - 20131115, 13 November 2013 (2013-11-13), XP050737022, Retrieved from the Internet <URL:http://www.3gpp.org/ftp/Meetings_3GPP_SYNC/RAN/RAN2/Docs/> [retrieved on 20131113]

## Description

### TECHNICAL FIELD

The disclosure relates to a wireless communication technology, and in particular to a resource allocation method, a user equipment and a computer storage medium.

### BACKGROUND

With the development of wireless multimedia services, demands of people for high data rate and good user experience are increasing, thereby making higher requirements on system capacity and coverage of a traditional cellular network. In addition, application scenarios of public security, social networking, near field data sharing, local advertising and the like make demands of people, for knowing people or things nearby and communicating therewith, gradually increase. A traditional base station (BS)-centred cellular network has obvious limitations to high data rate and supporting of Proximity Service (ProSe), and under this demand background, a Device-to-Device (D2D) technology emerges that is representative of a new development direction of future communication technologies. By applying the D2D technology, burdens on the cellular network can be alleviated, the power consumption of a battery of a User Equipment (UE) can be reduced, the data rate can be increased, the robustness of network infrastructure can be improved, and requirements for high data rate services and ProSe can be well met.

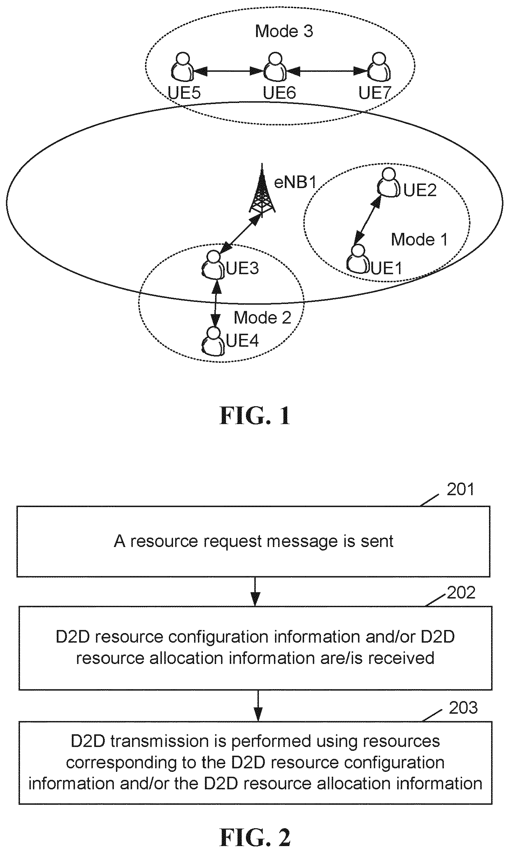

The D2D technology enables UEs to work at an authorized frequency band or a non-authorized frequency band, thereby allowing a plurality of D2D UEs to perform direct discovery or direct communication in the existence of network infrastructure or in the absence of network infrastructure. Fig. 1 is a diagram showing communication modes of a D2D system. As shown in Fig. 1, there are mainly three D2D application scenarios as follows.

As shown in a mode 1 in Fig. 1, a UE1 and a UE2 perform data interaction under the coverage of a cellular network, and user plane data does not pass through network infrastructure.

As shown in a mode 2 in Fig. 1, a UE performs relayed transmission in a weak or coverless area, a UE4 with poor signal quality is allowed to communicate with a network via an adjacent UE3 covered by the network, and coverage expansion and capacity improvement of an operator can be assisted.

As shown in a mode 3 in Fig. 1, when an earthquake or an emergency occurs and a cellular network cannot normally work, direct inter-device communication is allowed, and control planes and user planes among a UE5, a UE6 and a UE7 perform one-hop or multi-hop data communication without passing through network infrastructure.

The D2D technology usually includes a D2D discovery technology and a D2D communication technology, herein the D2D discovery technology refers to a technology configured to determine mutual adjacency (for example, within a range capable of performing D2D direct communication) between two or more D2D UEs or configured to determine adjacency of a first UE to a second UE. Usually, D2D UEs may discover each other by sending or receiving discovery signals or information, and in the case of coverage of the cellular network, a network may assist D2D UEs in D2D discovery. The D2D communication technology refers to a technology of communication in a manner that some or all pieces of communication data between the D2D UEs may not pass through network infrastructure.

From the perspective of public security, a public security network system needs to fulfil tasks in a service means of providing multimedia for a first responder, and is required to have a single-point communication function and an intra-group communication function. Specifically speaking, D2D communication in a public security scenario contains the following types: unicast, groupcast and broadcast. Unicast refers to a one-to-one communication mode between D2D UEs, and groupcast and broadcast are one-to-multiple communication modes between D2D UEs. Unicast communication may be regarded as a special form of groupcast communication. For example, a D2D communication group only contains two UEs, and in this case, D2D groupcast communication is equivalent to unicast communication. Meanwhile, a communication requirement of the public security scenario is high in robustness, and service can be still provided to the greatest extent in the case of shortage or congestion of current communication resources or paralysis of network infrastructure. Thus, public security requires D2D communication to operate in a network coverage scenario and requires D2D communication to operate in a partial coverage scenario or a network coverless scenario. In the network coverless scenario, D2D UEs may work in a self-organizing manner, some D2D UEs may be selected as Central Nodes (CN) under a coverless environment, and these CNs provide similar eNB functions.

However, a communication resource allocation solution applicable to the cellular network cannot be applied to a D2D discovery or communication system.

A technical literature ZTE CORPORATION: "On resource allocation for D2D discovery", 3GPP DRAFT; R2-134212 ON RESOURCE ALLOCATION IN D2D DISCOVERY, 3RD GENERATION PARTNERSHIP PROJECT (3GPP), MOBILE COMPETENCE CENTRE; 650, ROUTE DESLUCIOLES; F-06921 SOPHIA-ANTIPOLIS CEDEX; FRANCE, vol. RAN WG2, no. San Francisco, USA; 20131111-20131115 13 November 2013 (2013-11-13), XP050736960, discusses about resource allocation for D2D discovery.

A technical literature ZTE: "Consideration on the SI of LTE Device to Device Proximity Services", 3GPP DRAFT; R3-131457, 3RD GENERATION PARTNERSHIP PROJECT (3GPP), MOBILE COMPETENCE CENTRE; 650, ROUTE DESLUCIOLES; F-06921 SOPHIA-ANTIPOLIS CEDEX; FRANCE, vol. RAN WG3, no. Barcelona, Spain; 20130819-20130823 9 August 2013 (2013-08-09), XP050719525, discusses about LTE D2D proximity services.

US 2013/0287012 A1 introduces about NAS messages and procedures for triggering establishment of an optimized proximity data path, and US2013322276A1 introduces about D2D link adaptation.

In addition, a technical literature ETRI: "Fully scheduled D2D transmission in LTE-coverage", 3GPP DRAFT; R2-134095, 3RD GENERATION PARTNERSHIP PROJECT (3GPP), MOBILE COMPETENCE CENTRE; 650, ROUTE DESLUCIOLES; F-06921 SOPHIA-ANTIPOLIS CEDEX; FRANCE, vol. RAN WG2, no. San Francisco, USA; 20131111-20131115 13 November 2013 (2013-11-13), XP050736894, discusses about fully scheduled D2D transmission in LTE-coverage.

### SUMMARY

To solve the existing technical problems, the embodiments of the disclosure provide a resource allocation method, device and system, and a computer storage medium.

The invention is set out in the appended set of claims.

### BRIEF DESCRIPTION OF THE DRAWINGS

Fig. 1 is a diagram showing communication modes of a D2D system;
Fig. 2 is a flow chart of a resource allocation method provided by an embodiment of the disclosure;
Fig. 3 is a flow chart of another resource allocation method provided by an embodiment of the disclosure;
Fig. 4 is a flow chart of yet another resource allocation method provided by an embodiment of the disclosure;
Fig. 5 is a structural diagram of a UE provided by an embodiment of the disclosure;
Fig. 6 is a structural diagram of a node provided by an embodiment of the disclosure;
Fig. 7 is a structural diagram of another UE provided by an embodiment of the disclosure;
Fig. 8 is a structural diagram of a resource allocation system provided by an embodiment of the disclosure;
Fig. 9 is a flow chart of a resource allocation method provided by an embodiment 1 of the disclosure;
Fig. 10 is a flow chart of a resource allocation method provided by an embodiment 2 of the disclosure;
Fig. 11 is a flow chart of a resource allocation method provided by an embodiment 3 of the disclosure;
Fig. 12 is a flow chart of a resource allocation method provided by an embodiment 4 of the disclosure;
Fig. 13 is a flow chart of a resource allocation method provided by an embodiment 5 of the disclosure;
Fig. 14 is a flow chart of a resource allocation method provided by an embodiment 6 of the disclosure;
Fig. 15 is a flow chart of a resource allocation method provided by an embodiment 7 of the disclosure;
Fig. 16 is a flow chart of a resource allocation method provided by an embodiment 8 of the disclosure;
Fig. 17 is a flow chart of a resource allocation method provided by an embodiment 9 of the disclosure;
Fig. 18 is a flow chart of a resource allocation method provided by an embodiment 10 of the disclosure;
Fig. 19 is a flow chart of a resource allocation method provided by an embodiment 11 of the disclosure;
Fig. 20 is a flow chart of a resource allocation method provided by an embodiment 12 of the disclosure; and
Fig. 21 is a flow chart of a resource allocation method provided by an embodiment 13 of the disclosure.

### DETAILED DESCRIPTION

The technical problems to be solved by the embodiments of the disclosure include the problem in requesting D2D communication resource by a UE. Since an eNB cannot perceive D2D bearer setup and Quality of Service (QoS) requirements, it is necessary for a D2D UE to definitely inform the eNB or a central control node of a D2D buffer and a corresponding logical channel. In addition, in order to save signalling overheads needed by scheduling, the D2D UE needs to send information indicating whether to trigger semi-persistent scheduling, a period corresponding to semi-persistent scheduling and QoS information to the eNB or the central control node, such that the eNB or the central control node can adopt an appropriate resource scheduling manner according to requirements. In the embodiments of the disclosure, the above flow is designed, and a corresponding method for configuring and releasing a D2D bearer and a logical channel is provided. By means of the technical solutions provided by the embodiments of the disclosure, the UE may quickly and flexibly request for D2D communication resources as needed via a simple flow, thereby ensuring D2D communication to be performed smoothly.

An embodiment of the disclosure provides a resource allocation method. Fig. 2 is a flow chart of a resource allocation method provided by an embodiment of the disclosure. As shown in Fig. 2, the method includes the steps as follows.

Step 201: a resource request message is sent, the resource request message being a D2D scheduling request message or a buffer status report.

Here, the D2D scheduling request message may include any combination of the following fields: a D2D semi-persistent scheduling request or dynamic scheduling request or D2D semi-persistent scheduling release or dynamic scheduling release indication, a D2D semi-persistent scheduling period, a bit rate or resource size or buffer size.

The buffer status report includes any combination of the following fields: a D2D buffer indication, a buffer size, a D2D semi-persistent or dynamic scheduling request indication and a D2D semi-persistent scheduling period.

The D2D scheduling request message and the buffer status report may further include any combination of the following fields: a discovery identifier; a D2D groupcast or broadcast or unicast communication identifier; a D2D communication group identifier or communication destination identifier; or,
the D2D scheduling request message and the buffer status report may further include any combination of the following fields: a D2D logical channel identifier; a D2D logical channel group identifier; a QoS Class Identifier (QCI); a priority; and
the D2D scheduling request message and the buffer status report may include buffer information about one or more D2D logical channels separately, the D2D logical channels belonging to the same D2D logical channel group.

Step 202: D2D resource configuration information and/or D2D resource allocation information are/is received.

Step 203: D2D transmission is performed using resources corresponding to the D2D resource configuration information and/or the D2D resource allocation information, the D2D transmission being D2D discovery, or D2D broadcast or groupcast or unicast communication.

In an embodiment, after the D2D resource configuration information and/or the D2D resource allocation information are/is received, the method further includes that:
when the D2D resource configuration information indicates semi-persistent scheduling, it is determined whether it indicates D2D semi-persistent resource setup or D2D semi-persistent resource release, so as to obtain a first determination result; when the first determination result indicates D2D semi-persistent resource setup, positions of D2D semi-persistent resources are determined according to a D2D discovery or communication frame and/or a subframe offset within the D2D resource configuration information or the D2D resource allocation information; and when the first determination result indicates D2D semi-persistent resource release, D2D transmission or reception on corresponding D2D semi-persistent resources is stopped.

In another embodiment, after the D2D resource configuration information and/or the D2D resource allocation information are/is received, the method further includes that:
it is determined whether the D2D resource configuration information and/or the D2D resource allocation information are/is for D2D transmission resources or D2D reception resources, so as to obtain a second determination result; when the second determination result indicates that the D2D resource configuration information and/or the D2D resource allocation information are/is for the D2D transmission resources, D2D transmission is performed using corresponding resources; and when the second determination result indicates that the D2D resource configuration information and/or the D2D resource allocation information are/is for the D2D reception resources, D2D reception is performed at corresponding resource positions.

In another embodiment, the step of determining whether the D2D resource configuration information and/or the D2D resource allocation information are/is for the D2D transmission resources or the D2D reception resources includes that:
when the received D2D resource configuration information and/or D2D resource allocation information are/is transmission semi-persistent scheduling configurations, it is determined that the D2D resource configuration information and/or the D2D resource allocation information are/is for the D2D transmission resources, and when the received D2D resource configuration information and/or D2D resource allocation information are/is reception semi-persistent scheduling configurations, it is determined that the D2D resource configuration information and/or the D2D resource allocation information are/is for the D2D reception resources; or
it is determined whether a D2D UE identifier contained in the D2D resource configuration information is consistent with a stored UE identifier so as to obtain a third determination result, when the third determination result indicates consistency, it is determined that the D2D resource configuration information and/or the D2D resource allocation information are/is for the D2D transmission resources, and when the third determination result indicates inconsistency, it is determined that the D2D resource configuration information and/or the D2D resource allocation information are/is for the D2D reception resources.

In another embodiment, before the resource request message is sent, the method further includes that:
a service transmission demand is perceived, and it is determined whether semi-persistent scheduling or dynamic scheduling is needed;
when uplink air interface resources are sufficient, the resource request message is sent via Radio Resource Control (RRC) signalling or a Media Access Control (MAC) Control Element (CE); and
when uplink air interface resources are insufficient, the resource request message is sent via a Physical Uplink Control Channel (PUCCH).

In another embodiment, before the resource request message is sent, the method further includes that:
when service data reaches, a default D2D bearer and a corresponding logical channel or Packet Data Convergence Protocol (PDCP) or Radio Link Control (RLC) entity are configured; or
when the service data reaches, D2D bearers corresponding to different QoS and/or different communication destinations and corresponding logical channel or PDCP or RLC entities are configured.

Here, the step that the D2D bearers and/or the logical channel or PDCP or RLC entities corresponding to different QoS are configured includes that:
D2D bearers and logical channel or PDCP or RLC entities in one-to-one correspondence with different QCIs are configured according to system pre-configurations; or,
D2D bearers and logical channel or PDCP or RLC entities corresponding to multiple different QCIs are configured according to system pre-configurations; or
D2D bearers corresponding to different QoS requirements and corresponding logical channel or PDCP or RLC entities are configured through negotiation with a communication destination device.

On the other hand, the step that the D2D bearers and/or the logical channel or PDCP or RLC entities corresponding to communication destinations are configured includes that:
when D2D discovery is initiated, a D2D bearer corresponding to the D2D discovery and a corresponding logical channel or PDCP or RLC entity are configured according to system pre-configurations; or
when D2D broadcast communication is initiated, a D2D bearer corresponding to the D2D broadcast communication and a corresponding logical channel or PDCP or RLC entity are configured according to system pre-configurations; or
when D2D groupcast communication is initiated, a D2D bearer corresponding to a D2D communication group and a corresponding logical channel or PDCP or RLC entity are configured according to pre-configurations of the D2D communication group and system pre-configurations; or,
when D2D unicast communication is initiated, a D2D bearer corresponding to a D2D unicast communication destination device and a corresponding logical channel or PDCP or RLC entity are configured according to system pre-configurations or through negotiation with the communication destination device.

Here, a UE sending D2D data is called a first UE, and becomes a communication source; and a UE receiving the D2D data is called a second UE, and becomes a communication destination device.

If the UE is the first or second UE, a communication destination may be: all second or first UEs corresponding to the D2D broadcast communication, or a D2D communication group member, namely a second or first UE, corresponding to the D2D groupcast communication; and a second or first UE corresponding to the D2D unicast communication.

An embodiment of the disclosure also provides a computer storage medium having stored therein computer executable instructions configured to execute the resource allocation method according to the above embodiment of the disclosure.

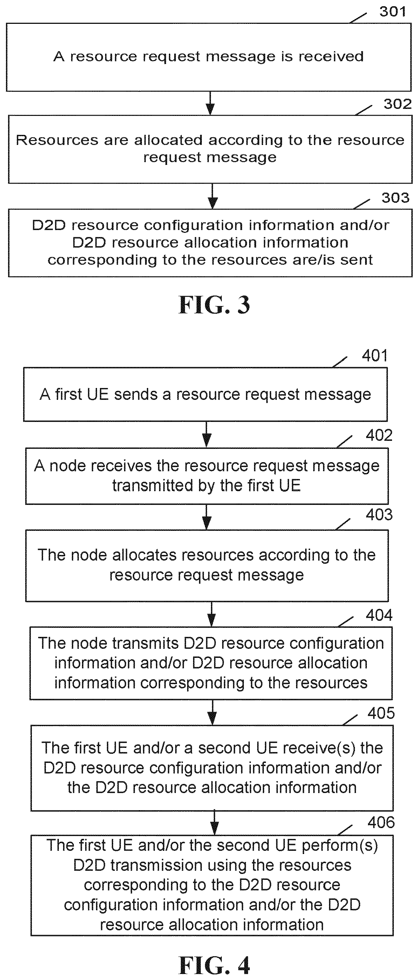

An embodiment of the disclosure also provides another resource allocation method. Fig. 3 is a flow chart of another resource allocation method provided by an embodiment of the disclosure. As shown in Fig. 3, the method includes the steps as follows.

Step 301: a resource request message is received, the resource request message being a D2D scheduling request message or a buffer status report.

Step 302: resources are allocated according to the resource request message.

Step 303: D2D resource configuration information and/or D2D resource allocation information corresponding to the resources are/is sent.

In an embodiment, the step that the D2D resource configuration information and/or the D2D resource allocation information corresponding to the resources are/is sent includes that:
the D2D resource configuration information and/or the D2D resource allocation information corresponding to the resources are/is sent by broadcasting and/or specific signalling.

Here, the step that the D2D resource configuration information and/or the D2D resource allocation information corresponding to the resources are/is sent by the specific signalling may refer to that: the D2D resource configuration information and/or the D2D resource allocation information corresponding to the resources are/is sent via a new RRC message or an existing RRC message.

Here, the D2D resource configuration information includes a D2D semi-persistent scheduling configuration, and the D2D semi-persistent scheduling configuration includes: a D2D semi-persistent scheduling air interface network temporary identifier, a D2D semi-persistent scheduling setup or release indication, a transmission semi-persistent scheduling configuration and/or a reception semi-persistent scheduling configuration, and a semi-persistent scheduling configuration period.

The D2D resource configuration information includes: a D2D discovery identifier or a D2D broadcast or groupcast or unicast communication identifier, a D2D groupcast communication group identifier and a D2D communication source identifier.

The D2D resource allocation information includes: a D2D communication time-frequency domain resource and transmission attribute information.

The D2D resource allocation information further includes: a D2D discovery or communication frame and/or a subframe offset.

An embodiment of the disclosure also provides a computer storage medium having stored therein computer executable instructions configured to execute the resource allocation method according to the above embodiment of the disclosure.

An embodiment of the disclosure also provides another resource allocation method, which includes that:
D2D resource pool information is received; and/or
D2D resource configuration information and/or D2D resource allocation information are/is received; and
resources corresponding to at least one of the D2D resource pool information, the D2D resource configuration information and the D2D resource allocation information are used for D2D reception.

In another embodiment, the step that the D2D resource pool information is received includes that:
D2D resource pool information broadcast by a node or sent by specific signalling is received; and/or,
D2D resource pool information sent by a Mobility Management Entity (MME) is received during attachment to a network or updating of a tracking area or D2D resource pool information is acquired from a D2D server or Proximity Service (ProSe) server,
herein a D2D resource pool corresponds to a resource pool for commercial application and/or a resource pool for public security, and
the resource pool for commercial application and/or the resource pool for public security are/is classified into resource pools corresponding to a covered scenario and a coverless scenario.

In another embodiment, the method further includes that:
after D2D data is received, a default D2D bearer and a corresponding logical channel are configured; or
after the D2D data is received, D2D bearers and/or logical channel or PDCP or RLC entities corresponding to different QoS and/or communication destinations are configured.

Here, the step that the D2D bearers and/or the logical channel or PDCP or RLC entities corresponding to different QoS are configured includes that:
D2D bearers and logical channel or PDCP or RLC entities in one-to-one correspondence with different QCIs are configured according to system pre-configurations; or,
D2D bearers and logical channel or PDCP or RLC entities corresponding to multiple different QCIs are configured according to system pre-configurations; or
D2D bearers corresponding to different QoS requirements and corresponding logical channel or PDCP or RLC entities are configured through negotiation with a communication source.

On the other hand, the step that the D2D bearers and/or the logical channel or PDCP or RLC entities corresponding to communication destinations are configured includes that:
when D2D broadcast communication is received, D2D bearers and corresponding logical channel or PDCP or RLC entities corresponding to D2D broadcast communication source identifier and logical channel identifier contained in the received D2D data are configured; or
when D2D groupcast communication is received, D2D bearers or corresponding logical channel or PDCP or RLC entities corresponding to the communication source identifier, communication destination identifier and the logical channel identifier contained in the received D2D data are configured.

On the other hand, after the D2D bearers and the corresponding logical channel or PDCP or RLC entities are configured, the method further includes that:
an inactivity timer for a D2D bearer or logical channel or PDCP or RLC entity is set, and each time a data packet is sent or received, the timer is reset; and
when the inactivity timer corresponding to the D2D bearer or logical channel or PDCP or RLC entity expires, the D2D bearer or logical channel or PDCP or RLC entity is released.

An embodiment of the disclosure also provides a computer storage medium having stored therein computer executable instructions configured to execute the resource allocation method according to the above embodiment of the disclosure.

An embodiment of the disclosure provides another resource allocation method. Fig. 4 is a flow chart of another resource allocation method provided by an embodiment of the disclosure. As shown in Fig. 4, the method includes the steps as follows.

Step 401: a first UE sends a resource request message, the resource request message being a D2D scheduling request message or a buffer status report.

Step 402: anode receives the resource request message sent by the first UE.

Step 403: The node allocates resources according to the resource request message.

Step 404: the node sends D2D resource configuration information and/or D2D resource allocation information corresponding to the resources.

Step 405: the first UE and/or a second UE receive(s) the D2D resource configuration information and/or the D2D resource allocation information.

Step 406: the first UE and/or the second UE perform(s) D2D transmission using the resources corresponding to the D2D resource configuration information and/or the D2D resource allocation information, the D2D transmission being D2D discovery, or D2D broadcast or groupcast or unicast communication.

In an embodiment, the D2D resource configuration information includes a D2D semi-persistent scheduling configuration, and the D2D semi-persistent scheduling configuration includes: a D2D semi-persistent scheduling air interface network temporary identifier, a D2D semi-persistent scheduling setup or release indication, a transmission semi-persistent scheduling configuration and/or a reception semi-persistent scheduling configuration, and a semi-persistent scheduling configuration period. The D2D resource configuration information includes: a D2D discovery identifier or a D2D broadcast or groupcast or unicast communication identifier, a D2D groupcast communication group identifier and a D2D communication source identifier.

In another embodiment, the D2D resource allocation information includes: a D2D communication time-frequency domain resource and transmission attribute information such as MCS. Furthermore, the D2D resource allocation information may further include: a D2D discovery or communication frame and/or a subframe offset.

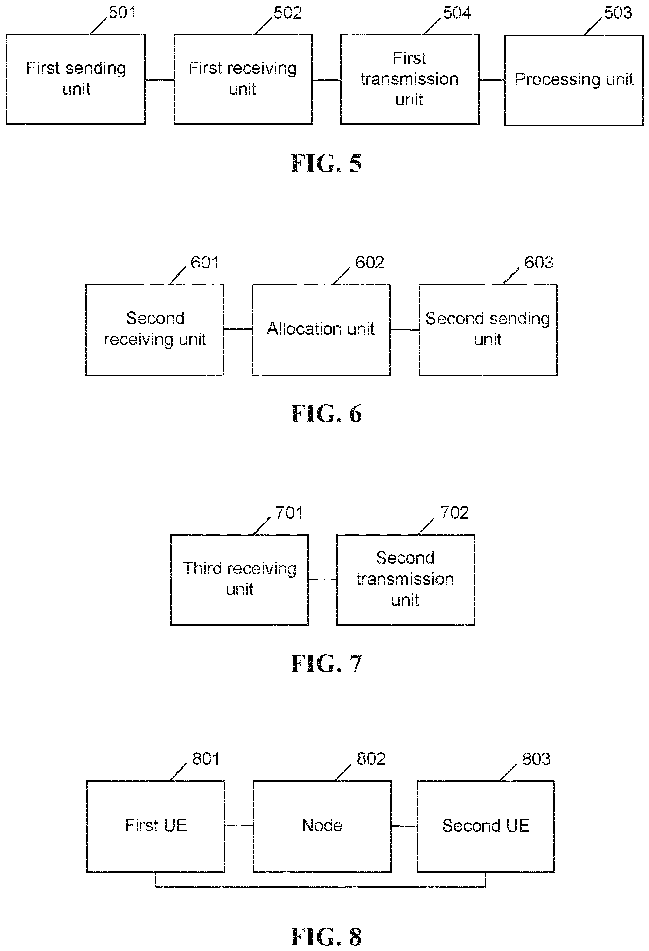

An embodiment of the disclosure provides a UE (first UE). Fig. 5 is a structural diagram of a UE provided by an embodiment of the disclosure. As shown in Fig. 5, the UE includes:
a first sending unit 501, configured to send a resource request message, the resource request message being a D2D scheduling request message or a buffer status report;
a first receiving unit 502, configured to receive D2D resource configuration information and/or D2D resource allocation information; and
a first transmission unit 503, configured to perform D2D transmission using resources corresponding to the D2D resource configuration information and/or the D2D resource allocation information received by the first receiving unit, the D2D transmission being D2D discovery, or D2D broadcast or groupcast or unicast communication.

The UE refers to a UE supporting a D2D communication function.

Here, the D2D scheduling request message includes any combination of the following fields:
a D2D semi-persistent scheduling request or dynamic scheduling request or D2D semi-persistent scheduling release or dynamic scheduling release indication, a D2D semi-persistent scheduling period, a bit rate or resource size or buffer size.

The buffer status report includes any combination of the following fields:
a D2D buffer indication, a buffer size, a D2D semi-persistent or dynamic scheduling request indication and a D2D semi-persistent scheduling period.

The D2D scheduling request message and the buffer status report separately include any combination of the following fields:
a D2D discovery identifier; a groupcast or broadcast or unicast communication identifier; a D2D communication group identifier or communication destination identifier.

The D2D scheduling request message and the buffer status report further include any combination of the following fields:
a D2D logical channel identifier; a D2D logical channel group identifier; a QCI; a priority.

Herein, the D2D scheduling request message and the buffer status report separately include buffer information about one or more D2D logical channels, the D2D logical channels belonging to the same D2D logical channel group.

In an embodiment, the UE further includes a processing unit 504, configured to: when the D2D resource configuration information indicates semi-persistent scheduling, determine whether it indicates D2D semi-persistent resource setup or D2D semi-persistent resource release so as to obtain a first determination result; when the first determination result indicates D2D semi-persistent resource setup, determine positions of D2D semi-persistent resources according to a D2D communication frame or subframe offset within the D2D resource configuration information; and when the first determination result indicates D2D semi-persistent resource release, stop D2D transmission or reception on corresponding D2D semi-persistent resources.

In another embodiment, the first transmission unit 503 is further configured to:
determine whether the D2D resource configuration information and/or the D2D resource allocation information are/is for D2D transmission resources or D2D reception resources so as to obtain a second determination result; when the second determination result indicates that the D2D resource configuration information and/or the D2D resource allocation information are/is for the D2D transmission resources, perform D2D transmission using corresponding resources; and when the second determination result indicates that the D2D resource configuration information and/or the D2D resource allocation information are/is for the D2D reception resources, perform D2D reception at corresponding resource positions.

In another embodiment, the first transmission unit 503 is further configured to: when the received D2D resource configuration information and/or D2D resource allocation information are/is transmission semi-persistent scheduling configurations, determine that the D2D resource configuration information and/or the D2D resource allocation information are/is for the D2D transmission resources; when the received D2D resource configuration information and/or D2D resource allocation information are/is reception semi-persistent scheduling configurations, determine that the D2D resource configuration information and/or the D2D resource allocation information are/is for the D2D reception resources; or,
determine whether a D2D UE identifier contained in the D2D resource configuration information is consistent with a stored UE identifier so as to obtain a third determination result, when the third determination result indicates consistency, determine that the D2D resource configuration information and/or the D2D resource allocation information are/is for the D2D transmission resources, and when the third determination result indicates inconsistency, determine that the D2D resource configuration information and/or the D2D resource allocation information are/is for the D2D reception resources.

In another embodiment, the first sending unit 501 is configured to: perceive a transmission demand for sending a service via a D2D bearer and a logical channel before sending the resource request message, and determine whether semi-persistent scheduling or dynamic scheduling is needed;
when uplink air interface resources are sufficient, send the resource request message via RRC signalling or an MAC CE; and
when uplink air interface resources are insufficient, send the resource request message via a PUCCH.

In another embodiment, the first transmission unit 503 is further configured to, when service data reaches, configure a default D2D bearer and a corresponding logical channel or PDCP or RLC entity; or
when the service data reaches, configure D2D bearers corresponding to different QoS and/or different communication destinations and corresponding logical channel or PDCP or RLC entities.

In the present embodiment, in practical application, the processing unit 504 in the first UE may be implemented by a Central Processing Unit (CPU), a Digital Signal Processor (DSP) or a Field-Programmable Gate Array (FPGA) in the UE. In practical application, the first sending unit 501 in the UE may be implemented by a transmitter or a transmitting antenna in the UE. In practical application, the first receiving unit 502 in the UE may be implemented by a receiver or a receiving antenna in the UE. In practical application, the first transmission unit 503 in the UE may be implemented by the CPU or the DSP or the FPGA together with a transceiver in the UE.

Those skilled in the art shall understand that functions of each processing unit in the first UE according to the embodiment of the disclosure may be understood with reference to relevant descriptions of the above resource allocation methods. Each processing unit in the first UE according to the embodiment of the disclosure may be implemented by an analogue circuit achieving the functions mentioned in the embodiment of the disclosure, or may be implemented by running of software, executing the functions mentioned in the embodiment of the disclosure, on an intelligent terminal.

An embodiment of the disclosure also provides a node. Fig. 6 is a structural diagram of a node provided by an embodiment of the disclosure. As shown in Fig. 6, the node includes:
a second receiving unit 601, configured to receive a resource request message, the resource request message being a D2D scheduling request message or a buffer status report;
an allocation unit 602, configured to allocate resources according to the resource request message received by the second receiving unit 601; and
a second sending unit 603, configured to send D2D resource configuration information and/or D2D resource allocation information corresponding to the resources allocated by the allocation unit 602.

The node may be an eNB or a UE executing a central control function. The node may also be called a CN.

In an embodiment, the second sending unit 603 is configured to send the D2D resource configuration information and/or the D2D resource allocation information corresponding to the resources by broadcasting and/or specific signalling.

In the present embodiment, the D2D resource configuration information includes a D2D semi-persistent scheduling configuration, and the D2D semi-persistent scheduling configuration includes: a D2D semi-persistent scheduling air interface network temporary identifier, a D2D semi-persistent scheduling setup or release indication, a transmission semi-persistent scheduling configuration and/or a reception semi-persistent scheduling configuration, and a semi-persistent scheduling configuration period.

On the other hand, the D2D resource configuration information includes: a D2D discovery identifier or a D2D broadcast or groupcast or unicast communication identifier, a D2D groupcast communication group identifier and a D2D communication source identifier.

On the other hand, the D2D resource allocation information includes: a D2D communication time-frequency domain resource and transmission attribute information.

On the other hand, the D2D resource allocation information further includes: a D2D discovery or communication frame and/or a subframe offset.

In the present embodiment, in practical application, the allocation unit 602 in the node may be implemented by a CPU, a DSP or an FPGA in the node. In practical application, the second sending unit 603 in the node may be implemented by a transmitter or a transmitting antenna in the node. In practical application, the second receiving unit 601 in the node may be implemented by a receiver or a receiving antenna in the node.

Those skilled in the art shall understand that functions of each processing unit in the node according to the embodiment of the disclosure may be understood with reference to relevant descriptions of the above resource allocation methods. Each processing unit in the node according to the embodiment of the disclosure may be implemented by an analogue circuit achieving the functions mentioned in the embodiment of the disclosure, or may be implemented by running of software, executing the functions mentioned in the embodiment of the disclosure, on an intelligent terminal.

An embodiment of the disclosure also provides another UE. The UE may be a second UE and/or a first UE. Fig. 7 is a structural diagram of another UE provided by an embodiment of the disclosure. As shown in Fig. 7, the UE includes:
a third receiving unit 701, configured to receive D2D resource configuration information and/or D2D resource allocation information; and
a second transmission unit 702, configured to perform D2D reception using resources corresponding to the D2D resource configuration information and/or the D2D resource allocation information received by the third receiving unit 701.

On the other hand, the third receiving unit 701 is configured to receive D2D resource pool information broadcast by a node or sent by specific signalling, and/or,
receive D2D resource pool information sent by an MME during attachment to a network or updating of a tracking area or acquire D2D resource pool information from a D2D server or ProSe server,
herein a D2D resource pool corresponds to a resource pool for commercial application and/or a resource pool for public security, and
the resource pool for commercial application and/or the resource pool for public security are/is classified into resource pools corresponding to a covered scenario and a coverless scenario.

Preferably, the third receiving unit 701 is further configured to configure, after D2D data is received, a default D2D bearer and a corresponding logical channel, or
configure, after the D2D data is received, D2D bearers and/or logical channel or PDCP or RLC entities corresponding to different QoS and/or communication destinations.

Specifically, the third receiving unit 701 is configured to configure D2D bearers and logical channel or PDCP or RLC entities in one-to-one correspondence with different QCIs are configured according to system pre-configurations, or,
configure D2D bearers and logical channel or PDCP or RLC entities corresponding to multiple different QCIs according to system pre-configurations, or
configure D2D bearers corresponding to different QoS requirements and corresponding logical channel or PDCP or RLC entities through negotiation with a communication source.

On the other hand, the third receiving unit 701 is configured to, when D2D broadcast communication is received, configure D2D bearers and corresponding logical channel or PDCP or RLC entities corresponding to D2D broadcast communication source identifier and logical channel identifier contained in the received D2D data; or
when D2D groupcast communication is received, configure D2D bearers or corresponding logical channel or PDCP or RLC entities corresponding to communication source identifier, communication destination identifier and logical channel identifier contained in the received D2D data.

In the present embodiment, in practical application, the third receiving unit 701 in the second UE may be implemented by a receiver or a receiving antenna in the UE. In practical application, the second transmission unit 702 in the second UE may be implemented by a receiver or a receiving antenna in the second UE.

Those skilled in the art shall understand that functions of each processing unit in the second UE according to the embodiment of the disclosure may be understood with reference to relevant descriptions of the above resource allocation methods. Each processing unit in the second UE according to the embodiment of the disclosure may be implemented by an analogue circuit achieving the functions mentioned in the embodiment of the disclosure, or may be implemented by running of software, executing the functions mentioned in the embodiment of the disclosure, on an intelligent terminal.

An embodiment of the disclosure also provides a resource allocation system. Fig. 8 is a structural diagram of a resource allocation system provided by an embodiment of the disclosure. As shown in Fig. 8, the system includes: a first UE 801, a node 802 and a second UE 803, in which:
the first UE 801 is configured to send a resource request message to the node 802, the resource request message being a D2D scheduling request message or a buffer status report;
the node 802 is configured to receive the resource request message sent by the first UE 801, allocate resources according to the resource request message, and send D2D resource configuration information and/or D2D resource allocation information corresponding to the resources to the second UE 803; and
the second UE 803 is configured to receive the D2D resource configuration information and/or the D2D resource allocation information sent by the node 802, and perform D2D transmission using the resources corresponding to the D2D resource configuration information and/or the D2D resource allocation information.

The disclosure is introduced below together with each embodiment in detail.

Embodiments 1 to 5 give a method for performing D2D communication and D2D communication resource release by requesting for D2D communication resources by a UE using a newly designed D2D scheduling request message.

### Embodiment 1

In a commercial application scenario, Mary and John hold a UE1 and a UE2 having D2D communication functions. The UE1 and the UE2 fall within a D2D communication range mutually.

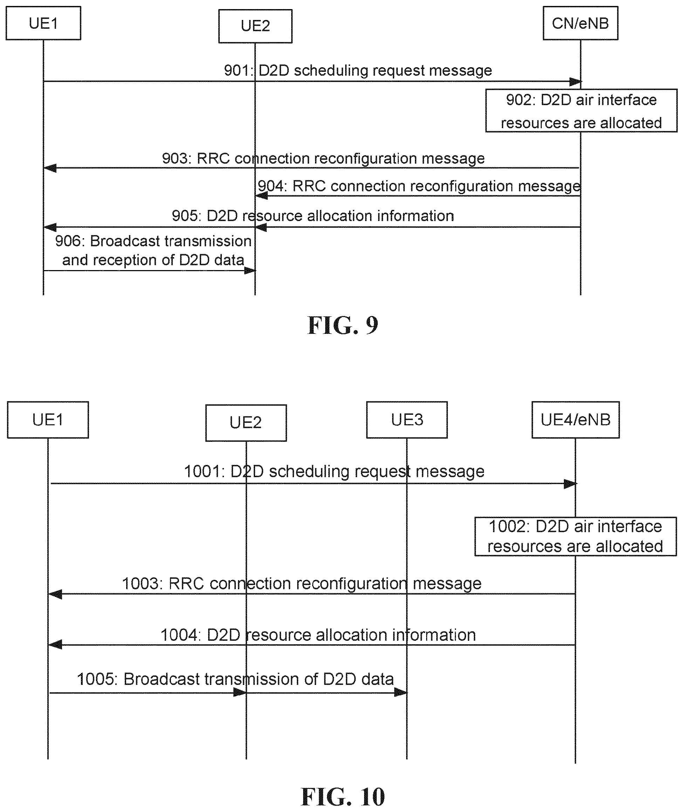

The UE1 expects to initiate D2D communication with the UE2, but the UE1 does not have sufficient uplink air interface resources to send an RRC message or user plane data. Fig. 9 is a flow chart of a resource allocation method provided by an embodiment 1 of the disclosure. As shown in Fig. 9, the method includes the steps as follows.

Step 901: a UE1 sends a D2D scheduling request message to an eNB via a PUCCH.

Here, the D2D scheduling request message may contain a D2D indication. In addition, the D2D scheduling request message may further contain a D2D semi-persistent scheduling indication and the like.

Step 902: after receiving the D2D scheduling request message, the eNB allocates D2D air interface resources according to an indication of the scheduling request message.

Step 903: after accomplishing resource allocation, the eNB sends an RRC connection reconfiguration message to the UE1.

Here, the RRC connection reconfiguration message includes D2D transmission semi-persistent configuration information such as a D2D semi-persistent scheduling air interface network temporary identifier, a D2D semi-persistent scheduling setup indication, a transmission semi-persistent scheduling configuration or a semi-persistent scheduling configuration period.

Step 904: the eNB sends an RRC connection reconfiguration message to a UE2.

Here, the RRC connection reconfiguration message includes D2D reception semi-persistent configuration information such as a D2D semi-persistent scheduling air interface network temporary identifier, a D2D semi-persistent scheduling setup indication or a reception semi-persistent scheduling configuration period.

Step 905: the eNB sends D2D resource allocation information to the UE1 and the UE2.

Here, the D2D resource allocation information includes: information such as D2D resource positions, resource sizes and an MCS mode used during UE transmission. The D2D resource allocation information may be borne by physical layer signalling or RRC signalling.

Step 906: after receiving D2D resource configuration information and the D2D resource allocation information, the UE1 and the UE2 perform broadcast transmission and reception of D2D data on allocated D2D semi-persistent resources.

### Embodiment 2

In a public security scenario, an Officer A, an Officer B, an Officer C and an Officer D use a public security UE1, UE2, UE3 and UE4 having D2D functions. All of the Officer A, the Officer B, the Officer C and the Officer D subscribe for public security service. After the Officer A, the Officer B, the Officer C and the Officer D arrive at a rescue place, the UEs thereof are not within a network coverage range, but the UE1, the UE2, the UE3 and the UE4 fall within a D2D communication range mutually. The UE4 serves as a central control node in this case, the UE1, the UE2 and the UE3 have access to the UE4, and resource allocation is executed by the UE4.

At the rescue place, the Officer A expects to initiate a broadcast call to inform other Officers nearby of relevant information. Fig. 10 is a flow chart of a resource allocation method provided by an embodiment 2 of the disclosure. As shown in Fig. 10, the method includes the steps as follows.

Step 1001: a UE1 of an Officer A sends a D2D scheduling request message.

Here, the D2D scheduling request message may include a D2D semi-persistent scheduling indication, a semi-persistent scheduling interval and the like. In addition, the D2D scheduling request message may further optionally include a semi-persistent scheduling data bit rate, a communication type indication and the like. Here, the semi-persistent scheduling data bit rate may be replaced with a semi-persistent scheduling byte number within unit time or a resource block size. The communication type indication is configured to indicate whether communication expected to be initiated by a UE1 is broadcast, groupcast or unicast; and correspondingly, a central control node may take the received D2D scheduling request message as a reference base for resource allocation or a reference base for indicating whether it is necessary to send resource allocation information to relevant UEs by specific signalling or broadcasting.

Step 1002: after receiving the D2D scheduling request message, a UE4 serving as the central control node allocates air interface resources according to an indication of the scheduling request message.

Step 1003: after accomplishing resource allocation, the central control node sends an RRC connection reconfiguration message to the UE1.

Here, the RRC connection reconfiguration message includes D2D transmission semi-persistent configuration information such as a D2D semi-persistent scheduling air interface network temporary identifier, a D2D semi-persistent scheduling setup indication, a transmission semi-persistent scheduling configuration or a semi-persistent scheduling configuration period. Optionally, D2D resource configuration information may include a D2D broadcast communication identifier.

Step 1004: the central control node sends D2D resource allocation information to the UE1.

Here, the D2D resource allocation information includes information such as D2D resource positions, D2D resource sizes and an MCS mode used during UE transmission. The D2D resource allocation information may be borne by physical layer signalling or RRC signalling. If the D2D resource allocation information is borne by the physical layer signalling, the UE1 calculates a subframe position for resource allocation according to the semi-persistent scheduling configuration period contained in the D2D transmission semi-persistent scheduling configuration and by taking a subframe, in which the D2D resource allocation information is received, as a start frame. If the D2D resource allocation information is borne by the RRC signalling, the RRC signalling also needs to contain position information about a start frame and a subframe.

Step 1005: after receiving D2D resource configuration information and the D2D resource allocation information, the UE1 performs broadcast transmission of D2D data on allocated D2D semi-persistent resources.

As adjacent nodes UE2 and UE3 with respect to the UE1, the UE2 and UE3 may monitor a D2D resource pool according to D2D communication resource pool information pre-configured by a system or D2D communication resource pool system information sent via the central control node, and after the UE1 starts to perform broadcast transmission of D2D data, the UE2 and the UE3 may receive D2D data.

### Embodiment 3

In a public security scenario, an Officer A, an Officer B, an Officer C and an Officer D use a public security UE1, UE2, UE3 and UE4 having D2D functions. All of the Officer A, the Officer B, the Officer C and the Officer D subscribe for public security service, and the UE1, the UE2 and the UE3 are all configured to belong to a D2D communication group X. After the Officer A, the Officer B, the Officer C and the Officer D arrive at a rescue place, the UEs thereof are not within a network coverage range, but the UE1, the UE2, the UE3 and the UE4 fall within a D2D communication range mutually. The UE4 serves as a central control node in this case, the UE1, the UE2 and the UE3 have access to the UE4, and resource allocation is executed by the UE4.

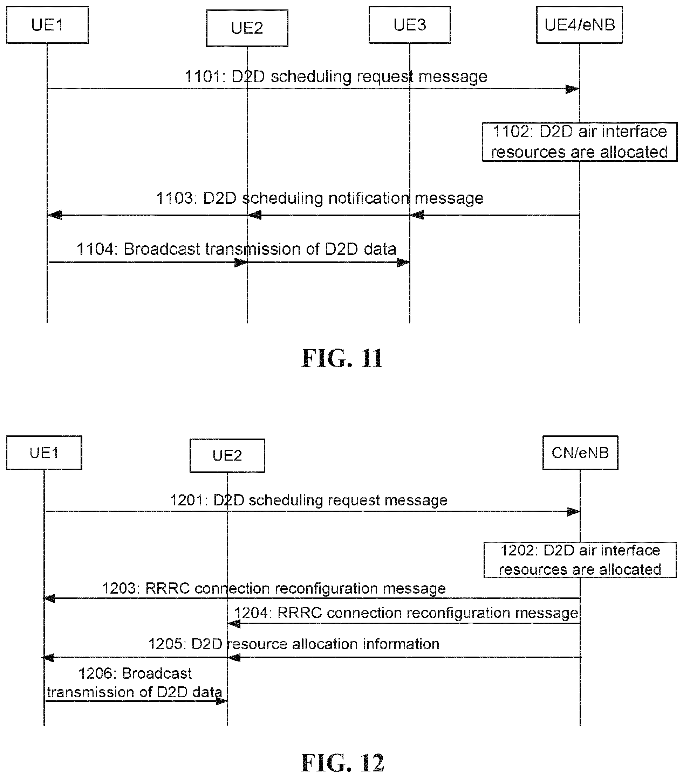

At the rescue place, the Officer A expects to initiate a groupcast call to inform other Officers, nearby, corresponding to the D2D communication group X of relevant information. Fig. 11 is a flow chart of a resource allocation method provided by an embodiment 3 of the disclosure. As shown in Fig. 11, the method includes the steps as follows.

Step 1101: a UE1 of an Officer A sends a D2D scheduling request message.

Here, the D2D scheduling request message may include a D2D semi-persistent scheduling indication, a logical channel identifier bearing groupcast communication and/or a corresponding QCI and a buffer size of a logical channel. In addition, the D2D scheduling request message may further optionally include a group identifier GID corresponding to a D2D communication group X.

Step 1102: after receiving the D2D scheduling request message, a UE4 serving as a central control node performs admission control, and allocates air interface resources according to an indication of the scheduling request message.

Step 1103: after accomplishing resource allocation, the central control node sends a D2D scheduling notification message by broadcasting.

Here, the D2D scheduling notification message includes D2D resource configuration information, and the D2D resource configuration information includes D2D transmission semi-persistent configuration information such as a D2D semi-persistent scheduling setup indication, a transmission semi-persistent scheduling configuration or a semi-persistent scheduling configuration period. In addition, the D2D resource configuration information may further include a D2D groupcast communication group identifier GID and/or a D2D transmission UE identifier and the like. The D2D scheduling notification message further includes D2D resource allocation information such as a D2D communication time-frequency domain resource and transmission attribute information MCS. Furthermore, the D2D scheduling notification message may further include: D2D communication frame or subframe offset information.

Step 1104: after receiving the D2D resource configuration information and the D2D resource allocation information, the UE1 determines that the D2D transmission UE identifier is consistent therewith, and broadcast transmission of D2D data may be performed on allocated D2D semi-persistent resources.

As adjacent nodes UE2 and UE3 with respect to the UE1, the UE2 and UE3 may perform monitoring on corresponding resources according to semi-persistent resource configuration and allocation information contained in a received D2D scheduling notification, and after the UE1 starts to perform broadcast transmission of D2D data, the UE2 and the UE3 may receive D2D data.

### Embodiment 4

In a commercial application scenario, Mary and John hold a UE1 and a UE2 having D2D communication functions. The UE1 and the UE2 fall within a D2D communication range mutually. The UE1 expects to initiate D2D communication with the UE2. Fig. 12 is a flow chart of a resource allocation method provided by an embodiment 4 of the disclosure. As shown in Fig. 12, the method includes the steps as follows.

Step 1201: a UE1 sends a D2D scheduling request message to an eNB.

Here, the D2D scheduling request message may include a D2D semi-persistent scheduling indication, a semi-persistent scheduling interval and the like. In addition, the D2D scheduling request message may further optionally include a semi-persistent scheduling data bit rate, a communication type indication, a UE identifier and the like. Here, the semi-persistent scheduling data bit rate may be replaced with a semi-persistent scheduling byte number or a resource block size. The communication type indication is configured to indicate whether communication expected to be initiated by the UE1 is broadcast, groupcast or unicast; and correspondingly, the eNB may take the received D2D scheduling request message as a reference base for resource allocation or a reference base for indicating whether it is necessary to send resource allocation information to relevant UEs by specific signalling or broadcasting.

Step 1202: after receiving the D2D scheduling request message, the eNB performs admission control, and allocates D2D air interface resources according to an indication of the scheduling request message.

Step 1203: after accomplishing resource allocation, the eNB sends an RRC connection reconfiguration message to the UE1.

Here, the RRC connection reconfiguration message includes D2D transmission semi-persistent configuration information such as a D2D semi-persistent scheduling air interface network temporary identifier, a D2D semi-persistent scheduling setup indication, a transmission semi-persistent scheduling configuration or a semi-persistent scheduling configuration period.

Step 1204: the eNB sends an RRC connection reconfiguration message to a UE2.

Here, the RRC connection reconfiguration message includes D2D reception semi-persistent configuration information such as a D2D semi-persistent scheduling air interface network temporary identifier, a D2D semi-persistent scheduling setup indication or a reception semi-persistent scheduling configuration period.

Step 1205: the eNB sends D2D resource allocation information to the UE1 and the UE2.

Here, the D2D resource allocation information includes: information such as D2D resource positions, D2D resource sizes and an MCS mode used during UE transmission. The D2D resource allocation information may be borne by physical layer signalling or RRC signalling.

Step 1206: after receiving D2D resource configuration information and the D2D resource allocation information, the UE1 and the UE2 may perform broadcast transmission and reception of D2D data on allocated D2D semi-persistent resources.

### Embodiment 5

In a commercial application scenario, Mary and John hold a UE1 and a UE2 having D2D communication functions. The UE1 and the UE2 fall within a D2D discovery range mutually.

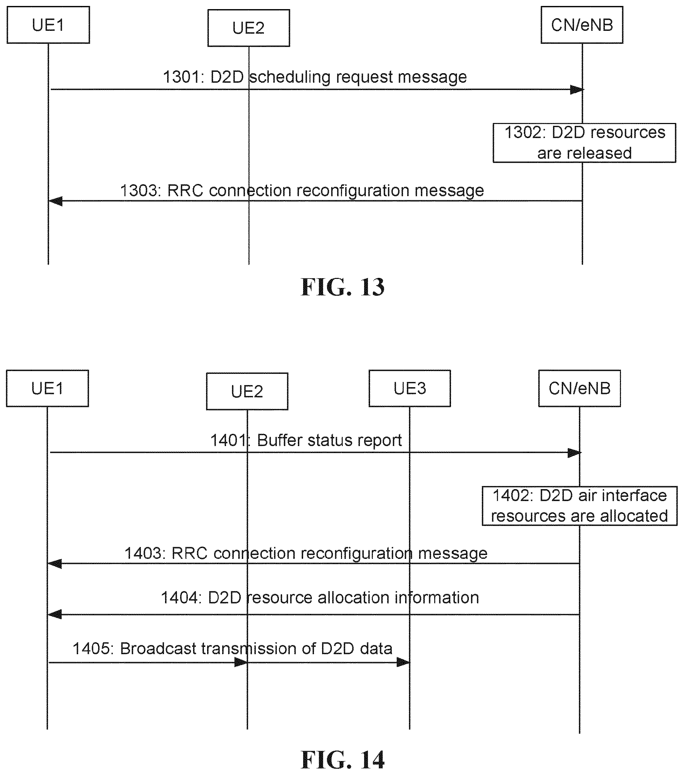

The UE1 expects to be discovered by other UEs, and has requested for semi-persistent resources in accordance with a flow described above to send a D2D discovery message. Provided that the UE1 does not expect to be discovered by other UEs any more, the UE1 requests to release the semi-persistent resources. Fig. 13 is a flow chart of a resource allocation method provided by an embodiment 5 of the disclosure. As shown in Fig. 13, the method includes the steps as follows.

Step 1301: a UE1 sends a D2D scheduling request message containing a D2D semi-persistent scheduling release indication to an eNB.

Step 1302: the eNB releases corresponding D2D resources, and the D2D resources may be subsequently allocated to other D2D UEs for use.

Step 1303: the eNB sends an RRC connection reconfiguration message containing D2D semi-persistent configuration release information to the UE1, and after receiving the message, the UE1 releases a semi-persistent D2D communication configuration.

Embodiments 6 to 9 give a method for performing D2D communication and D2D communication resource release by requesting for D2D communication resources by a UE using an enhanced D2D buffer status report.

### Embodiment 6

In a public security scenario, an Officer A, an Officer B, an Officer C and an Officer D use a public security UE1, UE2, UE3 and UE4 having D2D functions. All of the Officer A, the Officer B, the Officer C and the Officer D subscribe for public security service. After the Officer A, the Officer B, the Officer C and the Officer D arrive at a rescue place, the UEs thereof are not within a network coverage range, but the UE1, the UE2, the UE3 and the UE4 fall within a D2D communication range mutually. The UE4 serves as a central control node in this case, the UE1, the UE2 and the UE3 have access to the UE4, and resource allocation is executed by the UE4.

At the rescue place, the Officer A expects to initiate a broadcast call to inform other Officers nearby of relevant information. Fig. 14 is a flow chart of a resource allocation method provided by an embodiment 6 of the disclosure. As shown in Fig. 14, the method includes the steps as follows.

Step 1401: a UE1 of an Officer A sends a D2D buffer status report.

Here, the D2D buffer status report may include a D2D indication, a semi-persistent scheduling indication, a semi-persistent scheduling interval and the like. In addition, the D2D buffer status report further includes a logical channel identifier configured by the UE1 and corresponding to D2D communication, a buffer size of a corresponding logical channel, and the like.

Step 1402: after receiving the D2D buffer status report, a UE4 serving as a central control node allocates air interface resources according to an indication of the D2D buffer status report.

Step 1403: after accomplishing resource allocation, the central control node sends an RRC connection reconfiguration message to the UE1.

Here, the RRC connection reconfiguration message includes D2D transmission semi-persistent configuration information such as a D2D semi-persistent scheduling air interface network temporary identifier, a D2D semi-persistent scheduling setup indication, a transmission semi-persistent scheduling configuration or a semi-persistent scheduling configuration period.

Step 1404: the central control node sends D2D resource allocation information to the UE1.

Here, the D2D resource allocation information includes information such as D2D time-frequency resource positions, D2D time-frequency resource sizes and an MCS mode used during UE transmission. The D2D resource allocation information may be borne by physical layer signalling or RRC signalling. If the D2D resource allocation information is borne by the physical layer signalling, the UE1 calculates a subframe position for resource allocation according to the semi-persistent scheduling configuration period contained in the D2D transmission semi-persistent scheduling configuration and by taking a subframe, in which the D2D resource allocation information is received, as a start frame. If the D2D resource allocation information is borne by the RRC signalling, the RRC signalling also needs to contain position information about a start frame and a subframe.

Step 1405: after receiving D2D resource configuration information and the D2D resource allocation information, the UE1 may perform broadcast transmission of D2D data on allocated D2D semi-persistent resources.

As adjacent nodes UE2 and UE3 with respect to the UE1, the UE2 and UE3 may monitor a D2D resource pool according to D2D communication resource pool information pre-configured by a system or D2D communication resource pool system information sent via the central control node, and after the UE1 starts to perform broadcast transmission of D2D data, the UE2 and the UE3 may receive D2D data.

### Embodiment 7

In a public security scenario, an Officer A, an Officer B, an Officer C and an Officer D use a public security UE1, UE2, UE3 and UE4 having D2D functions. All of the Officer A, the Officer B, the Officer C and the Officer D subscribe for public security service, and the UE1, the UE2 and the UE3 are all configured to belong to a D2D communication group X. After the Officer A, the Officer B, the Officer C and the Officer D arrive at a rescue place, the UEs thereof are not within a network coverage range, but the UE1, the UE2, the UE3 and the UE4 fall within a D2D communication range mutually. The UE4 serves as a central control node in this case, the UE1, the UE2 and the UE3 have access to the UE4, and resource allocation is executed by the UE4.

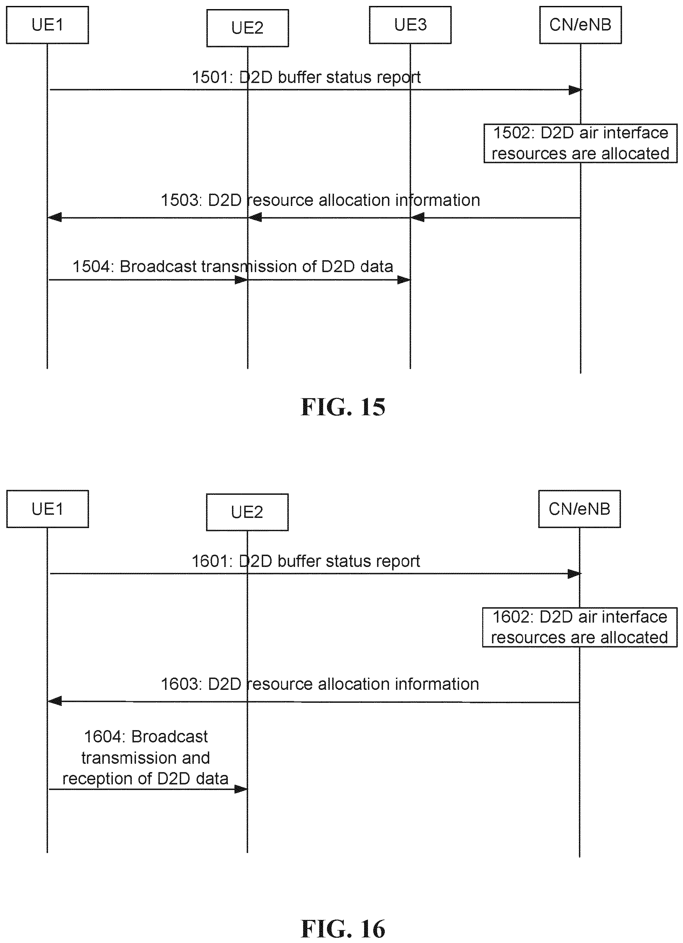

At the rescue place, the Officer A expects to initiate a groupcast call to inform other Officers, nearby, corresponding to the D2D communication group X of relevant information. Fig. 15 is a flow chart of a resource allocation method provided by an embodiment 7 of the disclosure. As shown in Fig. 15, the method includes the steps as follows.

Step 1501: a UE1 of an Officer A sends a D2D buffer status report.

Here, the D2D buffer status report may include a D2D indication, a semi-persistent scheduling indication, a logical channel identifier bearing groupcast communication and/or a corresponding QCI, a buffer size of a logical channel and the like. In addition, the D2D buffer status report may further include a group identifier GID corresponding to a D2D communication group X.

Step 1502: after receiving the D2D buffer status report, a UE4 serving as a central control node allocates air interface resources according to an indication of the buffer status report.

Step 1503: after accomplishing resource allocation, the central control node sends D2D resource allocation information by broadcasting.

Here, the D2D resource allocation information includes D2D transmission semi-persistent configuration information such as a D2D semi-persistent scheduling setup indication and/or a transmission semi-persistent scheduling configuration period. In addition, the D2D resource allocation information may further include a D2D groupcast communication group identifier and/or a D2D transmission UE identifier and the like. The D2D resource allocation information further includes a D2D communication time-frequency domain resource, transmission attribute information MCS and the like. Furthermore, the D2D resource allocation information may further include: D2D communication frame or subframe offset information.

Step 1504: after receiving D2D resource configuration information and the D2D resource allocation information, the UE1 determines that the D2D transmission UE identifier is consistent therewith, and broadcast transmission of D2D data may be performed on allocated D2D semi-persistent resources.

As adjacent nodes UE2 and UE3 with respect to the UE1, the UE2 and UE3 may perform monitoring on corresponding resources according to semi-persistent resource configuration and allocation information contained in the received D2D resource allocation information, and after the UE1 starts to perform broadcast transmission of D2D data, the UE2 and the UE3 may receive D2D data.

### Embodiment 8

In a commercial application scenario, Mary and John hold a UE1 and a UE2 having D2D communication functions. The UE1 and the UE2 fall within a D2D communication range mutually. The UE1 expects to initiate D2D communication with the UE2. Fig. 16 is a flow chart of a resource allocation method provided by an embodiment 8 of the disclosure. As shown in Fig. 16, the method includes the steps as follows.

Step 1601: a UE1 sends a D2D buffer status report to an eNB.

Here, the D2D buffer status report may include a D2D indication, logical channel group identifiers corresponding to a plurality of logical channels bearing D2D communication, a buffer size of a corresponding logical channel group, a priority and the like.

Step 1602: after receiving the D2D buffer status report, the eNB allocates air interface resources according to an indication of the D2D buffer status report.

Step 1603: after accomplishing resource allocation, the eNB sends D2D resource allocation information.

Here, the D2D resource allocation information includes information such as D2D resource positions, D2D resource sizes and an MCS mode used during UE transmission. The D2D resource allocation information may be borne by physical layer signalling or RRC signalling.

Step 1604: after receiving the D2D resource allocation information, the UE1 may perform D2D transmission on allocated D2D resources.

### Embodiment 9

In a commercial application scenario, Mary and John hold a UE1 and a UE2 having D2D communication functions. The UE1 and the UE2 fall within a D2D communication range mutually.

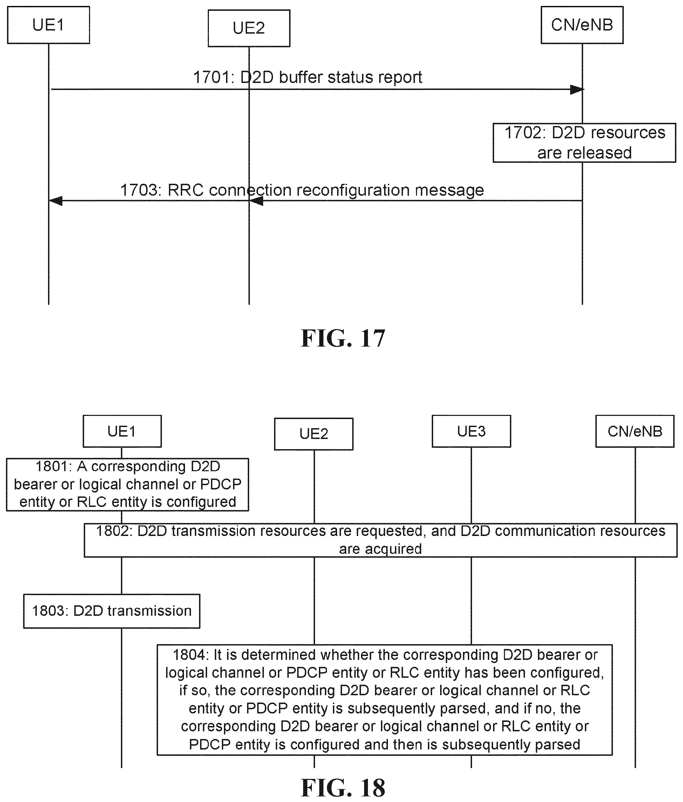

The UE1 expects to initiate D2D communication with the UE2 and requests for D2D semi-persistent resources to perform D2D communication. Provided that the UE1 accomplishes groupcast communication, the UE1 expects to release the semi-persistent D2D resources. Fig. 17 is a flow chart of a resource allocation method provided by an embodiment 9 of the disclosure. As shown in Fig. 17, the method includes the steps as follows.

Step 1701: a UE1 sends a D2D buffer status report.

Here, a buffer size is 0.

Step 1702: after receiving the D2D buffer status report, an eNB releases corresponding D2D resources, and the resources may be subsequently allocated to other D2D UEs for use.

Step 1703: the eNB sends an RRC connection reconfiguration message containing D2D semi-persistent configuration release information to the UE1 and a UE2, and after receiving the RRC connection reconfiguration message, the UE1 and the UE2 release a semi-persistent D2D communication configuration.

Embodiments 10 to 13 give a method for configuring and releasing a UE D2D bearer or logical channel or RLC entity or PDCP entity and a method for acquiring a D2D resource pool.

### Embodiment 10

In a public security scenario, an Officer A, an Officer B and an Officer C use a public security UE1, UE2 and UE3 having D2D functions. All of the Officer A, the Officer B and the Officer C subscribe for public security service, and the UE1, the UE2 and the UE3 are all configured to belong to a D2D communication group X. After the Officer A, the Officer B and the Officer C arrive at a rescue place, they are all covered by an eNB, the UE1, the UE2 and the UE3 fall within a D2D communication range mutually, and the UE1, the UE2 and the UE3 have access to the eNB.

At the rescue place, the Officer A expects to initiate a groupcast call to inform other Officers, nearby, corresponding to the D2D communication group X of relevant information. Fig. 18 is a flow chart of a resource allocation method provided by an embodiment 10 of the disclosure. As shown in Fig. 18, the method includes the steps as follows.

Step 1801: a UE1 of an Officer A configures a corresponding D2D bearer or logical channel or RLC entity or PDCP entity according to different QCIs and/or communication destinations in accordance with configurations provided by a system in advance.

Here, a current communication object probably is a broadcast communication identifier, a D2D communication group identifier or a receiving UE identifier for D2D unicast communication. In the present example, the current communication object is an identifier corresponding to a D2D communication group X.

Step 1802: the UE1 requests for D2D transmission resources via an eNB and obtains D2D communication resources.

Step 1803: the UE1 sends data via a D2D bearer and a corresponding logical channel according to allocated D2D resources.

Here, a data packet assembled by the UE1 needs to include identifier information about the UE1. In addition, if the D2D bearer or logical channel or RLC entity or PDCP entity is configured according to different QCIs, the data packet also needs to carry a corresponding QCI or corresponding logical channel identifier information. If the D2D bearer or logical channel or RLC entity or PDCP entity is configured according to communication destinations, the data packet needs to carry a communication destination identifier. If the D2D bearer or logical channel or RLC entity or PDCP entity is configured according to different QCIs and communication destinations, the data packet needs to carry the corresponding QCI or logical channel identifier information and the communication destination identifier information simultaneously.

Step 1804: after receiving a D2D groupcast data packet sent by the UE1, a UE2 and a UE3 determine, according to a source UE identifier, the communication destination identifier and the logical channel identifier information included by the D2D groupcast data packet, whether the corresponding D2D bearer or logical channel or RLC entity or PDCP entity has been configured; if so, the corresponding D2D bearer or logical channel or RLC entity or PDCP entity is subsequently parsed by RLC and PCDP entities corresponding to a bearer; and if no, the corresponding D2D bearer or logical channel or RLC entity or PDCP entity is configured, and then is subsequently parsed by the RLC and PCDP entities corresponding to the bearer.

### Embodiment 11

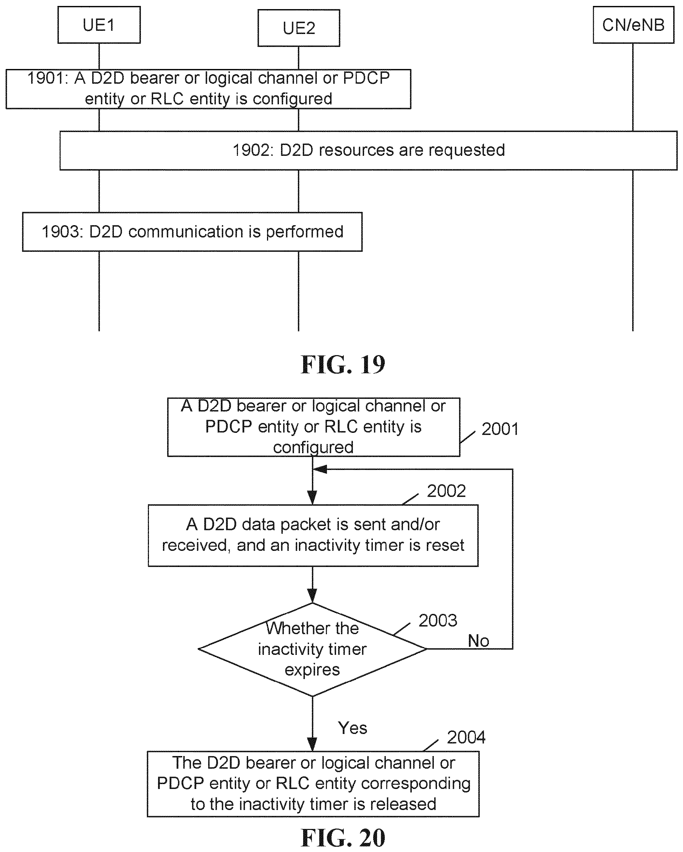

In a commercial application scenario, Mary and John hold a UE1 and a UE2 having D2D communication functions. The UE1 and the UE2 fall within a D2D communication range mutually. The UE1 expects to initiate D2D communication with the UE2. Fig. 19 is a flow chart of a resource allocation method provided by an embodiment 11 of the disclosure. As shown in Fig. 19, the method includes the steps as follows.

Step 1901: a UE1 and a UE2 negotiate to configure a D2D bearer or logical channel or RLC entity or PDCP entity.

Step 1902: the UE1 initiates a request for D2D resources.

Step 1903: after the D2D resources are obtained, D2D communication is performed via the corresponding D2D bearer or logical channel or RLC entity or PDCP entity using the resources.

### Embodiment 12

After creating a D2D bearer or logical channel or RLC entity or PDCP entity according to the method in the embodiment 10 or the method in the embodiment 11, a UE sends and/or receives a D2D data packet using the D2D bearer or logical channel or RLC entity or PDCP entity. The UE sets an inactivity timer for each D2D bearer or logical channel or RLC entity or PDCP entity, and each time the data packet is sent or received, the timer will be reset. If the UE does not send or receive the D2D data packet on the D2D bearer or logical channel or RLC entity or PDCP entity within a long period of time, the inactivity timer corresponding to the D2D bearer or logical channel or RLC entity or PDCP entity expires, and the UE releases a bearer. The same inactivity timer may be reused in correspondence to the D2D bearer or logical channel or RLC entity or PDCP entity of the same bearer. Fig. 20 is a flow chart of a resource allocation method provided by an embodiment 12 of the disclosure. As shown in Fig. 20, the method includes the steps as follows.

Step 2001: a UE creates a D2D bearer or logical channel or RLC entity or PDCP entity.

Here, the UE may create the D2D bearer or logical channel or RLC entity or PDCP entity according to the method in the embodiment 10 or the method in the embodiment 11, which will not be elaborated herein.

Step 2002: the UE sends and/or receives a D2D data packet using the D2D bearer or logical channel or RLC entity or PDCP entity. Each time the data packet is sent or received, an inactivity timer is reset.

Here, the UE sets an inactivity timer for each D2D bearer or logical channel or RLC entity or PDCP entity.

Step 2003: it is determined whether the inactivity timer corresponding to the D2D bearer or logical channel or RLC entity or PDCP entity expires, if so, Step 2004 is executed, and if no, Step 2002 is re-executed.

If a D2D data packet is not sent or received on the D2D bearer or logical channel or RLC entity or PDCP entity within a preset time, the inactivity timer corresponding to the D2D bearer or logical channel or RLC entity or PDCP entity expires.

Step 2004: the UE releases the bearer or logical channel or RLC entity or PDCP entity corresponding to the inactivity timer.

### Embodiment 13

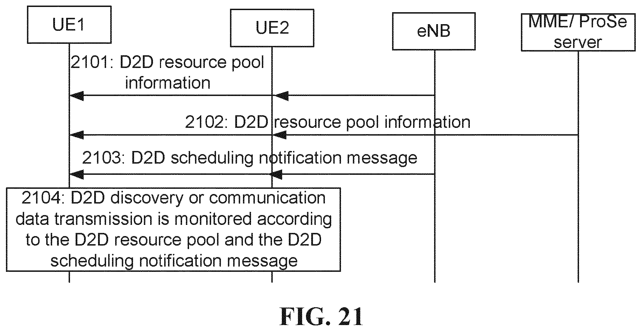

It is assumed that a UE1 has a capability of D2D discovery or communication both in a commercial application scenario and a public security scenario. Fig. 21 is a flow chart of a resource allocation method provided by an embodiment 13 of the disclosure. As shown in Fig. 21, the method includes the steps as follows.

Step 2101: when a UE1 is covered by a network, the UE1 may receive D2D resource pool information broadcast by an eNB.

Here, the D2D resource pool information broadcast by the eNB is mainly applied to a commercial application scenario.

Step 2102: during attachment to the network or updating of a tracking area, the UE may acquire the D2D resource pool information from an MME or a D2D server or a ProSe server.

Resource pools here may be applied to a public security scenario. A D2D resource pool not only includes resources in a covered scenario, but also includes resource information in a coverless scenario. In addition, the D2D resource pool may aim at D2D discovery or D2D communication.

Optionally, Step 2103: the eNB probably sends a D2D scheduling notification message, the D2D scheduling notification message containing D2D resources which have been allocated to a serving cell from the D2D resource pool and are used by the UE.

Step 2104: the UE1 may monitor and receive D2D discovery or communication data according to the D2D resource pool information and the optional D2D scheduling notification message.

Preferably, if enabling a public security function, the UE1 needs to monitor all of the resource pools simultaneously. If the UE1 is under a coverless state, the UE1 may monitor resources corresponding to the coverless scenario for public security.

In conclusion, by means of the method, the system, the UE and the computer storage medium provided by the embodiments of the disclosure, D2D communication resources may be quickly and flexibly requested as needed via a simple flow, thereby ensuring D2D resource allocation and subsequent D2D communication to be performed smoothly. In addition, the method provided by the disclosure may also be applied to communication in a commercial application scenario.

Those skilled in the art shall understand that the embodiments of the disclosure may be provided as a method, a system or a computer program product. Thus, forms of hardware embodiments, software embodiments or embodiments integrating software and hardware may be adopted in the disclosure. Moreover, a form of the computer program product implemented on one or more computer available storage media (including, but are not limited to, a disk memory, an optical memory and the like) containing computer available program codes may be adopted in the disclosure.

The disclosure is described with reference to flow charts and/or block diagrams of the method, the device (system) and the computer program product according to the embodiments of the disclosure. It will be appreciated that each flow and/or block in the flow charts and/or the block diagrams and a combination of the flows and/or the blocks in the flow charts and/or the block diagrams may be implemented by computer program instructions. These computer program instructions may be provided for a general computer, a dedicated computer, an embedded processor or processors of other programmable data processing devices to generate a machine, such that an apparatus for implementing functions designated in one or more flows of the flow charts and/or one or more blocks of the block diagrams is generated via instructions executed by the computers or the processors of the other programmable data processing devices.

These computer program instructions may also be stored in a computer readable memory capable of guiding the computers or the other programmable data processing devices to work in a specific mode, such that a manufactured product including an instruction apparatus is generated via the instructions stored in the computer readable memory, and the instruction apparatus implements the functions designated in one or more flows of the flow charts and/or one or more blocks of the block diagrams.

These computer program instructions may also be loaded to the computers or the other programmable data processing devices, such that processing implemented by the computers is generated by executing a series of operation steps on the computers or the other programmable devices, and therefore the instructions executed on the computers or the other programmable devices provide a step of implementing the functions designated in one or more flows of the flow charts and/or one or more blocks of the block diagrams.

The above is only the preferred embodiments of the disclosure and is not intended to limit the protective scope of the claims.

### INDUSTRIAL APPLICABILITY

According to the embodiments of the disclosure, a resource request message is sent, the resource request message being a D2D scheduling request message or a buffer status report; D2D resource configuration information and/or D2D resource allocation information are/is received; and D2D transmission is performed using resources corresponding to the D2D resource configuration information and/or the D2D resource allocation information. Thus, a UE may quickly and flexibly request for D2D communication resources as needed via a simple flow, thereby ensuring D2D resource allocation and subsequent D2D communication to be performed smoothly.

## Claims

1. A resource allocation method for a User Equipment, UE, the method comprising:
receiving Device-to-Device, D2D resource pool information and/or D2D resource configuration information; and
using resources corresponding to at least one of the D2D resource pool information and/or the D2D resource configuration information for reception of D2D data;
**characterized in that**, the method further comprises:
after reception of the D2D data, configuring D2D bearers and/or logical channel or PDCP or RLC entities corresponding to different Quality of Service, QoS, and/or communication destinations;
wherein configuring the D2D bearers and/or the logical channel or PDCP or RLC entities corresponding to different QoS comprises:
configuring D2D bearers and logical channel or PDCP or RLC entities in one-to-one correspondence with different QoS Class Identifiers, QCIs, according to system pre-configurations; or,
configuring D2D bearers and logical channel or PDCP or RLC entities corresponding to multiple different QCIs according to system pre-configurations; or
configuring D2D bearers corresponding to different QoS requirements and corresponding logical channel or PDCP or RLC entities through negotiation with a communication source;
wherein configuring the D2D bearers and/or the logical channel or PDCP or RLC entities corresponding to communication destinations comprises:
when D2D broadcast communication is received, configuring D2D bearers and corresponding logical channel or PDCP or RLC entities corresponding to D2D broadcast communication source identifier and logical channel identifier contained in the received D2D data; or
when D2D groupcast communication is received, configuring D2D bearers or corresponding logical channel or PDCP or RLC entities corresponding to communication source identifier, communication destination identifier and logical channel identifier contained in the received D2D data.

2. The method according to claim 1, wherein receiving the D2D resource pool information comprises:
receiving D2D resource pool information broadcast by a node or sent by specific signalling; and/or,
receiving D2D resource pool information sent by a Mobility Management Entity, MME, during attachment to a network or updating of a tracking area or acquiring D2D resource pool information from a D2D server or Proximity Service, ProSe, server,
wherein the D2D resource pool corresponds to a resource pool for commercial application and/or a resource pool for public security, and
the resource pool for commercial application and/or the resource pool for public security are/is classified into resource pools corresponding to a covered scenario and a coverless scenario.

3. The method according to claim 1, further comprising: after configuring the D2D bearers and the corresponding logical channel or PDCP or RLC entities,
setting inactivity timers for the D2D bearers or logical channel or PDCP or RLC entities, and each time a data packet is sent or received, resetting the timers; and
when an inactivity timer corresponding to a D2D bearer or logical channel or PDCP or RLC entities expires, releasing the D2D bearer or logical channel or PDCP or RLC entities.

4. A User Equipment, UE, comprising:
a processor;
a memory, which is configured to store programs executable by the processor; wherein the processor is configured to execute the programs, when executed, perform: receiving Device-to-Device, D2D resource pool information and/or D2D resource configuration information; and
using resources corresponding to at least one of the D2D resource pool information and/or the D2D resource configuration information for reception of the D2D data;
**characterized in that**, the processor is further configured to perform:
after reception of the D2D data, configuring D2D bearers and/or logical channel or PDCP or RLC entities corresponding to different Quality of Service, QoS, and/or communication destinations;
wherein configuring the D2D bearers and/or the logical channel or PDCP or RLC entities corresponding to different QoS comprises:
configuring D2D bearers and logical channel or PDCP or RLC entities in one-to-one correspondence with different QoS Class Identifiers, QCIs, according to system pre-configurations; or,
configuring D2D bearers and logical channel or PDCP or RLC entities corresponding to multiple different QCIs according to system pre-configurations; or
configuring D2D bearers corresponding to different QoS requirements and corresponding logical channel or PDCP or RLC entities through negotiation with a communication source;
wherein configuring the D2D bearers and/or the logical channel or PDCP or RLC entities corresponding to communication destinations comprises:
when D2D broadcast communication is received, configuring D2D bearers and corresponding logical channel or PDCP or RLC entities corresponding to D2D broadcast communication source identifier and logical channel identifier contained in the received D2D data; or
when D2D groupcast communication is received, configuring D2D bearers or corresponding logical channel or PDCP or RLC entities corresponding to communication source identifier, communication destination identifier and logical channel identifier contained in the received D2D data.

5. A computer storage medium having stored therein computer executable instructions which, when executed by a user equipment, UE, cause the UE to perform the resource allocation method according to any one of claims 1 to 3.

## Patentansprüche

1. Ressourcenzuweisungsverfahren für ein Benutzergerät (User Equipment, UE), wobei das Verfahren umfasst:
Empfangen von Vorrichtung-zu-Vorrichtung-(Device-to-Device-, D2D-)Ressourcenpool-Informationen und/oder D2D-Ressourcenkonfigurations-Informationen; und
Verwenden von Ressourcen, die wenigstens einer der D2D-Ressourcenpool-Informationen und/oder der D2D-Ressourcenkonfigurations-Informationen entsprechen, für den Empfang von D2D-Daten;
**dadurch gekennzeichnet, dass** das Verfahren ferner umfasst:
nach dem Empfang der D2D-Daten, Konfigurieren von D2D-Trägern und/oder logischen Kanal- oder PDCP-(Packet-Data-Convergence-Protocol-) oder RLC-Entitäten entsprechend unterschiedlicher Dienstgüte (Quality of Service, QoS) und/oder Kommunikationszielen;
wobei das Konfigurieren der D2D-Träger und/oder der logischen Kanal- oder PDCP- oder RLC-Entitäten entsprechend unterschiedlicher QoS umfasst:
Konfigurieren von D2D-Trägern und logischen Kanal- oder PDCP- oder RLC-Entitäten in Eins-zu-eins-Entsprechung mit unterschiedlichen QoS-Klassenkennungen (QoS Class Identifiers, QCIs) gemäß System-Vorkonfigurationen; oder,
Konfigurieren von D2D-Trägern und logischen Kanal- oder PDCP- oder RLC-Entitäten entsprechend mehreren unterschiedlichen QCIs gemäß System-Vorkonfigurationen; oder
Konfigurieren von D2D-Trägern entsprechend unterschiedlichen QoS-Anforderungen und entsprechenden logischen Kanal- oder PDCP- oder RLC-Entitäten durch Aushandlung mit einer Kommunikationsquelle;
wobei das Konfigurieren der D2D-Träger und/oder der logischen Kanal- oder PDCP- oder RLC-Entitäten entsprechend den Kommunikationszielen umfasst:
wenn D2D-Rundfunkkommunikation empfangen wird, Konfigurieren von D2D-Trägern und entsprechenden logischen Kanal- oder PDCP- oder RLC-Entitäten entsprechend der in den empfangenen D2D-Daten enthaltenen D2D-Rundfunkkommunikations-Quellkennung und logischen Kanalkennung; oder
wenn D2D-Gruppenkommunikation empfangen wird, Konfigurieren von D2D-Trägern oder entsprechenden logischen Kanal- oder PDCP- oder RLC-Entitäten entsprechend der in den empfangenen D2D-Daten enthaltenen Kommunikations-Quellkennung, Kommunikations-Zielkennung und logischen Kanalkennung.

2. Verfahren nach Anspruch 1, wobei das Empfangen der D2D-Ressourcenpool-Informationen umfasst:
Empfangen von D2D-Ressourcenpool-Informationen, die von einem Knoten rundgesendet oder durch spezifische Signalisierung gesendet wird; und/oder,
Empfangen von D2D-Ressourcenpool-Informationen, die von einer Mobilitätsmanagement-Entität (Mobility Management Entity, MME) während der Anbindung an ein Netzwerk oder der Aktualisierung eines Verfolgungsbereichs gesendet wird, oder Erfassen von D2D-Ressourcenpool-Informationen von einem D2D-Server oder einem Näherungsdienst-(Proximity-Service-, ProSe-)Server,
wobei der D2D-Ressourcenpool einem Ressourcenpool für kommerzielle Anwendungen und/oder einem Ressourcenpool für öffentliche Sicherheit entspricht, und
der Ressourcenpool für kommerzielle Anwendungen und/oder der Ressourcenpool für öffentliche Sicherheit in Ressourcenpools klassifiziert sind/ist, die einem abgedeckten Szenario und einem nichtabgedeckten Szenario entsprechen.

3. Verfahren nach Anspruch 1, ferner umfassend: nach dem Konfigurieren der D2D-Träger und der entsprechenden logischen Kanal- oder PDCP- oder RLC-Entitäten,
Setzen von Inaktivitäts-Timern für die D2D-Träger oder logischen Kanal- oder PDCP- oder RLC-Entitäten, und jedes Mal, wenn ein Datenpaket gesendet oder empfangen wird, Zurücksetzen der Timer; und
wenn ein Inaktivitäts-Timer, der einem D2D-Träger oder logischen Kanal- oder PDCP- oder RLC-Entitäten entspricht, abläuft, Freigeben des D2D-Trägers oder der logischen Kanal- oder PDCP- oder RLC-Entitäten.

4. Benutzergerät (User Equipment, UE), umfassend:
einen Prozessor;
einen Speicher, der konfiguriert ist, um vom Prozessor ausführbare Programme zu speichern; wobei der Prozessor konfiguriert ist, die Programme auszuführen, um bei Ausführung durchzuführen: Empfangen von Vorrichtung-zu-Vorrichtung-(Device-to-Device-, D2D-)Ressourcenpool-Informationen und/oder D2D-Ressourcenkonfigurations-Informationen; und
Verwenden von Ressourcen, die wenigstens einer der D2D-Ressourcenpool-Informationen und/oder der D2D-Ressourcenkonfigurations-Informationen entsprechen, für den Empfang der D2D-Daten;
**dadurch gekennzeichnet, dass** der Prozessor ferner konfiguriert ist, um durchzuführen:
nach dem Empfang der D2D-Daten, Konfigurieren von D2D-Trägern und/oder logischen Kanal- oder PDCP-(Packet-Data-Convergence-Protocol-) oder RLC-Entitäten entsprechend unterschiedlicher Dienstgüte (Quality of Service, QoS) und/oder Kommunikationszielen;
wobei das Konfigurieren der D2D-Träger und/oder der logischen Kanal- oder PDCP- oder RLC-Entitäten entsprechend unterschiedlicher QoS umfasst:
Konfigurieren von D2D-Trägern und logischen Kanal- oder PDCP- oder RLC-Entitäten in Eins-zu-eins-Entsprechung mit unterschiedlichen QoS-Klassenkennungen (QoS Class Identifiers, QCIs) gemäß System-Vorkonfigurationen; oder,
Konfigurieren von D2D-Trägern und logischen Kanal- oder PDCP- oder RLC-Entitäten entsprechend mehreren unterschiedlichen QCIs gemäß System-Vorkonfigurationen; oder
Konfigurieren von D2D-Trägern entsprechend unterschiedlichen QoS-Anforderungen und entsprechenden logischen Kanal- oder PDCP- oder RLC-Entitäten durch Aushandlung mit einer Kommunikationsquelle;
wobei das Konfigurieren der D2D-Träger und/oder der logischen Kanal- oder PDCP- oder RLC-Entitäten entsprechend den Kommunikationszielen umfasst:
wenn D2D-Rundfunkkommunikation empfangen wird, Konfigurieren von D2D-Trägern und entsprechenden logischen Kanal- oder PDCP- oder RLC-Entitäten entsprechend der in den empfangenen D2D-Daten enthaltenen D2D-Rundfunkkommunikations-Quellkennung und logischen Kanalkennung; oder
wenn D2D-Gruppenkommunikation empfangen wird, Konfigurieren von D2D-Trägern oder entsprechenden logischen Kanal- oder PDCP- oder RLC-Entitäten entsprechend der in den empfangenen D2D-Daten enthaltenen Kommunikations-Quellkennung, Kommunikations-Zielkennung und logischen Kanalkennung.

5. Computerspeichermedium, auf dem computerausführbare Anweisungen gespeichert sind, die bei Ausführung durch ein Benutzergerät (User Equipment, UE) das UE veranlassen, das Ressourcenzuweisungsverfahren nach einem der Ansprüche 1 bis 3 durchzuführen.

## Revendications

1. Procédé d'attribution de ressource pour un équipement utilisateur, UE, le procédé comprenant :
la réception d'informations de pool de ressources dispositif à dispositif, D2D, et/ou d'informations de configuration de ressources D2D ; et
l'utilisation de ressources correspondant à au moins l'une des informations de pool de ressources D2D et/ou des informations de configuration de ressources D2D pour la réception de données D2D ;
**caractérisé en ce que**, le procédé comprend également :
après réception des données D2D, la configuration de supports D2D et/ou d'un canal logique ou d'entités PDCP ou RLC correspondant à différentes qualités de service, QoS et/ou destinations de communication ;
dans lequel la configuration des supports D2D et/ou du canal logique ou des entités PDCP ou RLC correspondant à différentes QoS comprend :
la configuration de supports D2D et d'un canal logique ou d'entités PDCP ou RLC en correspondance biunivoque avec différents identifiants de classe QoS, QCI, selon des préconfigurations de système ; ou,
la configuration de supports D2D et d'un canal logique ou d'entités PDCP ou RLC correspondant à plusieurs QCI différents selon des préconfigurations de système ; ou
la configuration de supports D2D correspondant à différentes exigences de QoS et à un canal logique correspondant ou des entités PDCP ou RLC par négociation avec une source de communication ;
dans lequel la configuration des supports D2D et/ou du canal logique ou des entités PDCP ou RLC correspondant à des destinations de communication comprend :
lorsqu'une communication de diffusion D2D est reçue, la configuration de supports D2D et d'un canal logique correspondant ou d'entités PDCP ou RLC correspondant à un identifiant de source de communication de diffusion D2D et à un identifiant de canal logique contenus dans les données D2D reçues ; ou
lorsqu'une communication de diffusion de groupe D2D est reçue, la configuration de supports D2D ou d'un canal logique correspondant ou d'entités PDCP ou RLC correspondant à un identifiant de source de communication, à un identifiant de destination de communication et à un identifiant de canal logique contenus dans les données D2D reçues.

2. Procédé selon la revendication 1, dans lequel la réception des informations de pool de ressources D2D comprend :
la réception d'informations de pool de ressources D2D diffusées par un nœud ou envoyées par une signalisation spécifique ; et/ou,
la réception d'informations de pool de ressources D2D envoyées par une entité de gestion de mobilité, MME, lors d'un rattachement à un réseau ou d'une mise à jour d'une zone de suivi ou l'acquisition d'informations de pool de ressources D2D à partir d'un serveur D2D ou d'un serveur de service de proximité, ProSe,
dans lequel le pool de ressources D2D correspond à un pool de ressources pour une application commerciale et/ou à un pool de ressources pour la sécurité publique, et
le pool de ressources pour des applications commerciales et/ou le pool de ressources pour la sécurité publique est/sont classé(s) en pools de ressources correspondant à un scénario couvert et à un scénario non couvert.

3. Procédé selon la revendication 1, comprenant également :
après la configuration des supports D2D et du canal logique correspondant ou d'entités PDCP ou RLC correspondantes,
la définition de temporisateurs d'inactivité pour les supports D2D ou le canal logique ou les entités PDCP ou RLC, et chaque fois qu'un paquet de données est envoyé ou reçu, la réinitialisation des temporisateurs ; et
lorsqu'un temporisateur d'inactivité correspondant à un support D2D ou à un canal logique ou à des entités PDCP ou RLC expire, la libération du support D2D ou du canal logique ou des entités PDCP ou RLC.

4. Équipement utilisateur, UE, comprenant :
un processeur ;
une mémoire, qui est configurée pour stocker des programmes exécutables par le processeur ; dans lequel le processeur est configuré pour exécuter les programmes, lesquels, lorsqu'ils sont exécutés, réalisent : la réception d'informations de pool de ressources dispositif à dispositif, D2D et/ou d'informations de configuration de ressources D2D ; et
l'utilisation de ressources correspondant à au moins l'une des informations de pool de ressources D2D et/ou des informations de configuration de ressources D2D pour la réception des données D2D ;
**caractérisé en ce que**, le processeur est également configuré pour réaliser :
après réception des données D2D, la configuration de supports D2D et/ou d'un canal logique ou d'entités PDCP ou RLC correspondant à différentes qualités de service, QoS et/ou destinations de communication ;
dans lequel la configuration des supports D2D et/ou du canal logique ou des entités PDCP ou RLC correspondant à différentes QoS comprend :
la configuration de supports D2D et d'un canal logique ou d'entités PDCP ou RLC en correspondance biunivoque avec différents identifiants de classe QoS, QCI, selon des préconfigurations de système ; ou,
la configuration de supports D2D et d'un canal logique ou d'entités PDCP ou RLC correspondant à plusieurs QCI différents selon des préconfigurations de système ; ou
la configuration de supports D2D correspondant à différentes exigences de QoS et à un canal logique correspondant ou des entités PDCP ou RLC par négociation avec une source de communication ;
dans lequel la configuration des supports D2D et/ou du canal logique ou des entités PDCP ou RLC correspondant à des destinations de communication comprend :
lorsqu'une communication de diffusion D2D est reçue, la configuration de supports D2D et d'un canal logique correspondant ou d'entités PDCP ou RLC correspondant à un identifiant de source de communication de diffusion D2D et à un identifiant de canal logique contenus dans les données D2D reçues ; ou
lorsqu'une communication de diffusion de groupe D2D est reçue, la configuration de supports D2D ou d'un canal logique correspondant ou d'entités PDCP ou RLC correspondant à un identifiant de source de communication, à un identifiant de destination de communication et à un identifiant de canal logique contenus dans les données D2D reçues.

5. Support d'informations informatique stockant des instructions exécutables par ordinateur qui, lorsqu'elles sont exécutées par un équipement utilisateur, UE, amènent l'UE à réaliser le procédé d'attribution de ressource selon l'une quelconque des revendications 1 à **3.**
